# EUROPÄISCHE PATENTSCHRIFT

(11) **EP 1 528 352 B1**
(45) Veröffentlichungstag und Bekanntmachung des Hinweises auf die Patenterteilung: **10.05.2006**
(21) Anmeldenummer: 04024904.7
(22) Anmeldetag: 20.10.2004
(51) Int. Cl.: F41H 5/22, B60J 9/02

(54) **Ein-Ausstiegsluke für ein Kampffahrzeug, insbesondere einen Kampfpanzer**
Manhole cover for an armoured vehicle, in particular for a tank
Couvercle de trou pour un véhicule blindé, en particulier pour un char

(30) Priorität: 03.11.2003 DE 20316836 U
(43) Veröffentlichungstag der Anmeldung: 04.05.2005
(73) Patentinhaber: Krauss-Maffei Wegmann GmbH & Co. KG, 34127 Kassel (DE)
(72) Erfinder: Fehr, Michael, 34590 Wabern (DE); Sprafke, Uwe, 34270 Schauenburg (DE)
(74) Vertreter: Feder, Wolf-Dietrich

(56) Entgegenhaltungen:
- EP-A- 0 259 009
- DE-A1- 3 305 882
- DE-A1- 19 504 922
- US-A- 5 408 783

## Beschreibung

Die Erfindung betrifft eine Ein-Ausstiegsluke für ein Kampffahrzeug, insbesondere einen Kampfpanzer mit den Merkmalen aus dem Oberbegriff des Patentanspruchs 1.

Eine derartige Ein-Ausstiegsluke ist in DE 33 05 882 C2 beschrieben. Diese bekannte Ein-Ausstiegsluke besitzt eine Dichtungseinrichtung mit einem in der Lukenöffnung angeordneten zylindrischen Ring, der an seiner äußeren Mantelfläche ein Außengewinde aufweist, welches in ein in der Lukenöffnung angeordnetes Innengewinde eingreift. Mit Hilfe von am unteren Ende des Ringes angeordneten Handgriffen kann dieser aufwärts und abwärts geschraubt und damit angehoben oder abgesenkt werden. In der angehobenen Stellung legt sich der obere Rand des zylindrischen Rings dichtend an die Unterseite des Lukendeckels an.

Bei dieser bekannten Ein- und Ausstiegsluke ist die Bedienung der Dichtungsvorrichtung von innen relativ mühsam und eine einwandfreie Dichtung der Luke, die im geschlossenen Zustand wasser- und ABC-dicht sein soll, schwer zu erreichen.

Der Erfindung liegt die Aufgabe zugrunde, eine Ein-Ausstiegsluke mit den im Oberbegriff des Patentanspruchs 1 angegebenen Merkmalen so auszugestalten, dass die Dichtungsvorrichtung einfach aufgebaut, leicht zu bedienen und außerordentlich wirksam in der Abdichtung ist.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Der Grundgedanke der Erfindung besteht darin, die Dichtungsvorrichtung im wesentlichen mit drei Bauteilen aufzubauen, nämlich einem im Randbereich der Lukenöffnung fest angeordneten flachen Außenring, einem zylindrischen Innenring, der am Innenrand des Außenrings geführt und senkrecht zur Schließebene der Luke verschiebbar ist, und einem Dichtungsring, der an der Innenseite des Innenrings befestigt ist und mit diesem zusammen aus einer abgesenkten Stellung in eine angehobene Dichtungsstellung anhebbar ist, in welche er sich an die Unterseite des geschlossenen Lukendeckels dichtend anlegt.

Zur Erzielung einer besonders guten Abdichtung kann der Dichtungsring an den Innenring anvulkanisiert sein und einen sich von seiner Außenseite nach außen erstreckenden Dichtungslappen aufweisen, welcher die Oberseite des Innenrings sowie die ringförmige Trennfuge zwischen Innenring und Außenring überdeckend an den Außenring anvulkanisiert ist. Die Verschiebungsvorrichtung kann in der Art eines Schnellverschlusses ausgebildet sein mit einer unterhalb des Innenrings angeordneten, manuell drehbaren Platte, die an der dem Innenring zugewandten Oberseite eine in Umfangsrichtung keilförmig ansteigende Oberfläche besitzt. Mit dieser Verschiebungsvorrichtung kann mit wenigen Handgriffen und einer Drehung von weniger als 360° der Innenring und damit der Dichtungsring in die gewünschte Dichtungsstellung angehoben werden. Damit ist die Bedienung der Dichtungseinrichtung erheblich vereinfacht.

Im folgenden wird anhand der beigefügten Zeichnungen ein Ausführungsbeispiel für eine Ein-Ausstiegsluke nach der Erfindung näher erläutert.

In den Zeichnungen zeigen:
- Fig. 1: eine Aufsicht auf eine mit einem Lukendeckel verschließbare Ein- und Ausstiegsluke eines Kampffahrzeugs;
- Fig. 2: einen Schnitt nach der Linie II-II im geöffneten Zustand der Luke;
- Fig. 3A und 3B: einen gegenüber Fig. 2 stärker vergrößerten vertikalen Teilschnitt durch den Randbereich der Lukenöffnung der Luke nach Fig. 1 und 2 jeweils im geöffneten und geschlossenen Zustand der Luke;
- Fig. 4A und 4B: die in den Fig. 3A und 3B dargestellten Teile in isometrischer Darstellung.

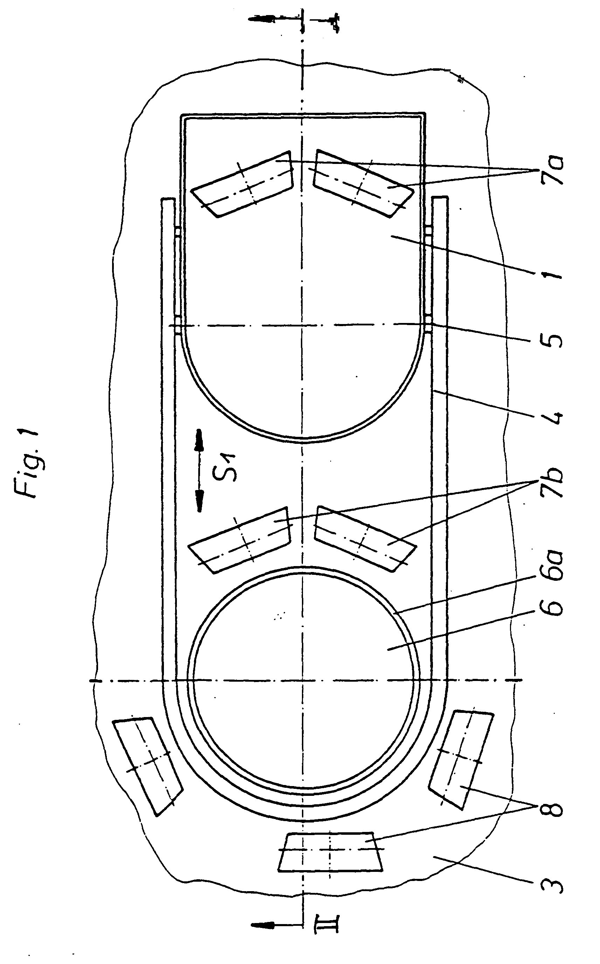

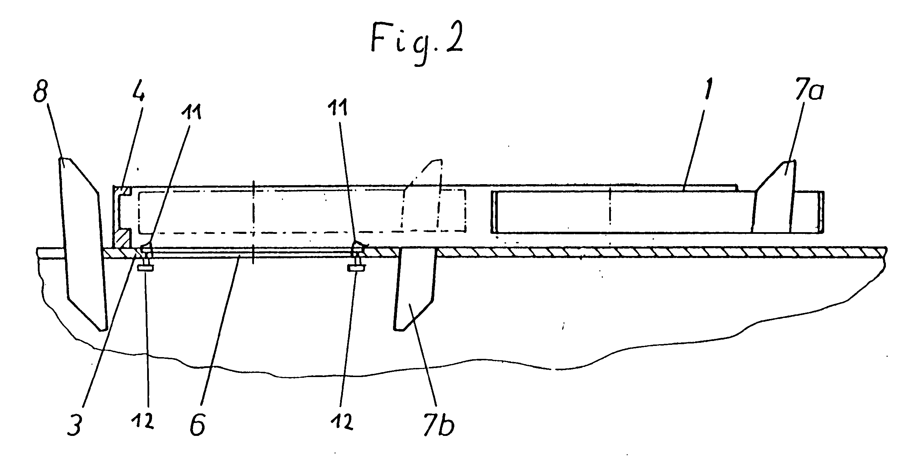

In den Fig. 1 und 2 ist die Ein- und Ausstiegsluke eines Kampffahrzeugs, beispielsweise eines Kampfpanzers dargestellt. Die Luke kann sich an der Oberseite der Fahrzeugwanne oder am Turm befinden.

Oberhalb der von der Panzerung 3 umgebenen Lukenöffnung 6 ist ein Lukendeckel 1 angeordnet, der parallel zur Schließebene der Lukenöffnung 6 in Pfeilrichtung S 1 verschiebbar ist. Hierzu sind zu beiden Seiten des Lukendeckels 1 Schienen 4 angeordnet, in denen mit dem Lukendeckel 1 verbundene Laufrollen 5 geführt sind. Die Vorrichtungen zum Verschieben des Lukendeckels 1 sind nicht eigens dargestellt. Die Verschiebung kann prinzipiell von Hand oder motorisch erfolgen, und die hierzu notwendigen Vorrichtungen können am oder im Lukendeckel 1 angeordnet sein.

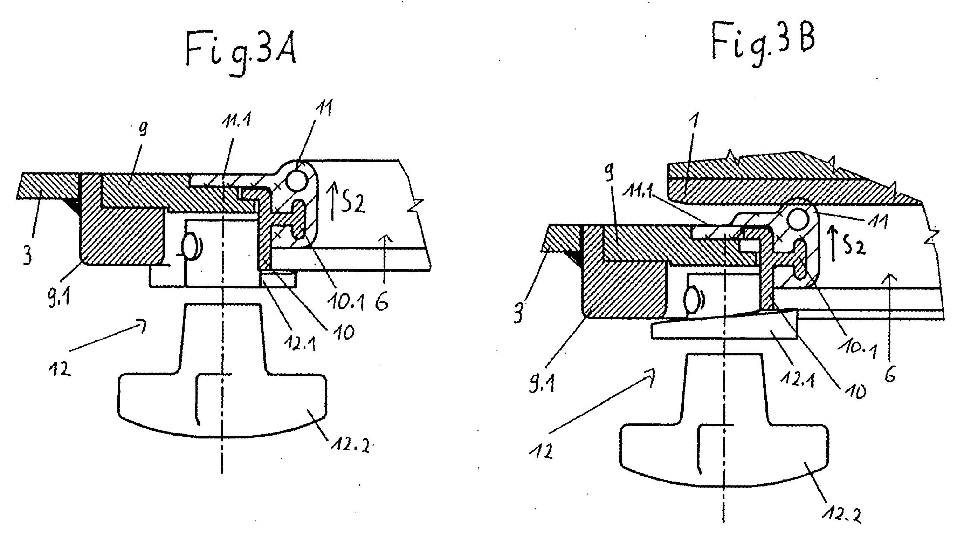

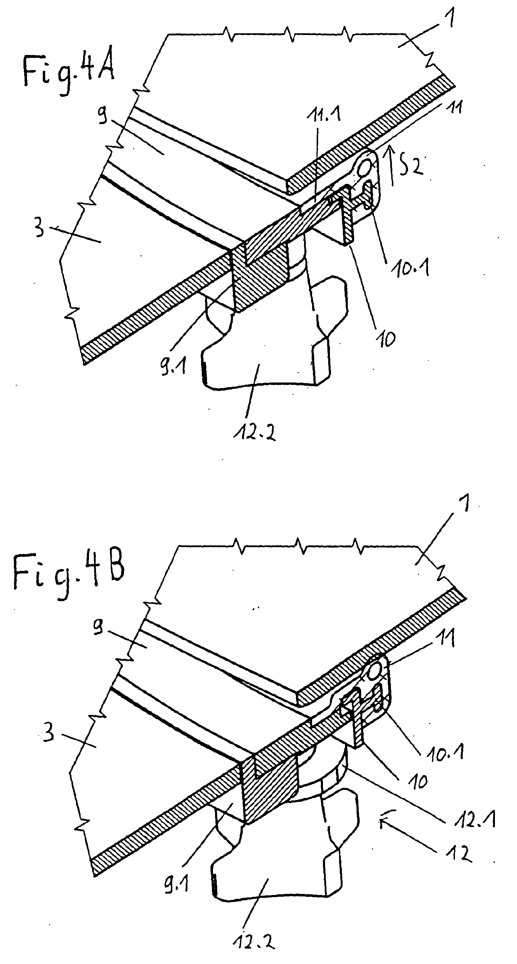

Im Bereich der Luke sind Sichtgeräte angeordnet, von denen sich die Sichtgeräte 8 außerhalb der Verschiebungsbahn des Lukendeckels 1 befinden und jeweils als eine Einheit aufgebaut sind. Weitere Sichtgeräte befinden sich in der Verschiebungsbahn des Lukendeckels 1. Diese Sichtgeräte sind aufgeteilt in fahrzeugfeste Unterteile 7b und in den Lukendeckel 1 eingebaute und mit diesem verschiebbare Oberteile 7a. In der Schließstellung des Lukendeckels 1 sind die Oberteile 7a und die Unterteile 7b der Sichtgeräte fluchtend zueinander und in optischem Kontakt angeordnet. Im Randbereich 6a der Lukenöffnung 6 ist eine Dichtungsvorrichtung angeordnet, die in Fig. 1 nicht und in Fig. 2 nur angedeutet dargestellt ist und im folgenden anhand der Fig. 3A, 3B sowie 4A, 4B näher erläutert wird.

Die Dichtungsvorrichtung besitzt einen im Randbereich der Lukenöffnung 6 angeordneten flachen Außenring 9, der in einem mit der Panzerung 3 durch Schweißung verbundenen Aufnahmering 9.1 ruht. Am Innenrand des Außenrings 9 ist ein im wesentlichen zylindrischer Innenring 10 geführt, der in einer Richtung S2 senkrecht zur Schließebene der Lukenöffnung 6 verschiebbar ist. Am Innenring 10 ist ein Dichtungsring 11 derart angeordnet, dass seine Oberkante sowohl in der angehobenen als auch in der abgesenkten Stellung oberhalb des Innenrings 10 und des Außenrings 9 liegt. Der Dichtungsring 11 ist an eine an der Innenseite des Innenrings angeordnete Befestigungsleiste 10.1 anvulkanisiert. An seiner Außenseite besitzt der Dichtungsring 11 einen sich nach außen erstreckenden ringförmigen Dichtungslappen 11.1, der die Oberkante des Innenrings 10 sowie die Trennfuge zwischen Innenring 10 und Außenring 9 überdeckend an den Außenring 9 anvulkanisiert ist.

Das Anheben und Absenken des Innenrings 10 geschieht mit einer Verschiebungsvorrichtung, die nach Art eines Schnellverschlusses ausgebildet ist mit einer unterhalb des Innenrings 10 angeordneten drehbaren Platte 12.1, die an ihrer dem Innenring 10 zugewandten Oberseite eine in Umfangsrichtung keilförmig ansteigende Oberfläche aufweist. Die Betätigung erfolgt über einen Drehknopf 12.2.

Die Wirkungsweise der Dichtungsvorrichtung ist aus den Fig. 3A bzw. 3B und 4A bzw. 4B ablesbar. In den Fig. 3A und 4A ist die Dichtungsvorrichtung im geöffneten Zustand der Luke dargestellt, während sie in den Fig. 3B und 4B im geschlossenen Zustand dargestellt ist. Wenn der Lukendeckel 1, wie in Fig. 3B und 4 B dargestellt, in die Geschlossenstellung verschoben ist, in der er oberhalb der Lukenöffnung 6 liegt, wird durch Drehen an den Drehknöpfen 12.2 der am Umfang der Lukenöffnung 6 verteilten Verschiebungsvorrichtungen 12 der Innenring 10 angehoben, bis sich der Dichtungsring 11 an die Unterseite des Lukendeckels 1 dichtend anlegt. Die Verschiebungsbewegung des Innenrings 10 kann dabei durch eine Drehung der Drehknöpfe 12.2 erzielt werden, die kleiner als 360° ist. Somit ist das Öffnen und Schließen der Dichtungsvorrichtung rasch und mit wenig Aufwand durchführbar. Im geschlossenen Zustand des Lukendeckels 1 und der Dichtungseinrichtung ist durch das Anliegen des Dichtungsrings 11 an der Unterseite des Lukendeckels 1 und die dichte, durch Anvulkanisieren erzeugte Verbindung zwischen dem Dichtungsring 11 und dem Innenring 10 sowie dem Dichtungslappen 11.1 und dem Außenring 9 eine sehr gute Abdichtung erreicht.

Aufgrund der oben erläuterten Verriegelung der Dichtungsvorrichtung mittels der am Umfang der Lukenöffnung verteilten, durch die Drehknöpfe 12.2 betätigten Verschiebungsvorrichtungen 12 ist es nicht mehr notwendig, die Dichtung kreisförmig auszubilden. Sie kann auch andere Formen annehmen.

## Patentansprüche

1. Ein-Ausstiegsluke für ein Kampffahrzeug, insbesondere einen Kampfpanzer, mit einem Lukendeckel (1), der oberhalb des oberen Randes der Lukenöffnung (6) angeordnet ist und zum Öffnen und Schließen parallel zur Schließebene der Luke verschiebbar ist, und mit einer in der Lukenöffnung (6) senkrecht zur Schließebene bewegbar angeordneten Dichtungsvorrichtung, die in eine Öffnungsstellung soweit absenkbar ist, dass der Lukendeckel (1) unbehindert verschiebbar ist, während sie in eine Schließstellung soweit anhebbar ist, dass ihr oberer Rand dichtend an der Unterseite des Lukendeckels (1) liegt, **dadurch gekennzeichnet, dass** die Dichtungsvorrichtung einen im Randbereich (6a) der Lukenöffnung (6) fest angeordneten flachen Außenring (9) aufweist, an dessen Innenrand ein zylindrischer Innenring (10) senkrecht (S2) zur Schließebene verschiebbar geführt ist, und an der Innenseite des Innenrings (10) ein Dichtungsring (11) derart angeordnet ist, dass seine Oberkante oberhalb der Oberkante des Innenrings (10) und des Außenrings (9) liegt und der Innenring (10) mittels mehrerer über seinen Umfang verteilt angeordneter, manuell betätigbarer Verschiebungsvorrichtungen (12) aus der Öffnungsstellung derart in die Schließstellung verschiebbar ist, dass die Oberkante des Dichtungsrings (11) dichtend an der Unterseite des geschlossenen Lukendeckels (1) anliegt.

2. Ein-Ausstiegsluke nach Anspruch 1, **dadurch gekennzeichnet, dass** der Dichtungsring (11) an eine an der Innenseite des Innenrings (10) angeordnete Befestigungsleiste (10.1) anvulkanisiert ist.

3. Ein-Ausstiegsluke nach Anspruch 1 oder 2, **dadurch gekennzeichnet, dass** der Dichtungsring (11) an seiner Außenseite einen ringförmigen Dichtungslappen (11.1) aufweist, der die Oberkante des Innenrings (10) und die Trennfuge zwischen Innenring (10) und Außenring (9) überdeckend dichtend mit dem Außenring (9) verbunden ist.

4. Ein-Ausstiegsluke nach einem der Ansprüche 1 bis 3, **dadurch gekennzeichnet, dass** die Verschiebungsvorrichtung (12) eine unterhalb des Innenrings (10) angeordnete, manuell drehbare Platte (12.1) aufweist, die an der dem Innenring zugewandten Oberseite eine in Umfangsrichtung keilförmig ansteigende Oberfläche besitzt.

## Claims

1. Entry/exit hatch for a combat vehicle, in particular a combat tank, having a hatch cover (1), which is disposed above the upper edge of the hatch opening (6) and for opening and closing is displaceable parallel to the closing plane of the hatch, and having a sealing device, which is disposed movably at right angles to the closing plane in the hatch opening (6) and is lowerable far enough into an open position to allow unimpeded displacement of the hatch cover (1), while being liftable far enough into a closed position for its upper edge to lie sealingly against the underside of the hatch cover (1), **characterized in that** the sealing device comprises a flat outer ring (9), which is disposed in a fixed manner in the edge region (6a) of the hatch opening (6) and along the inner edge of which a cylindrical inner ring (10) extends displaceably at right angles (S2) to the closing plane, and on the inside of the inner ring (10) a sealing ring (11) is disposed in such a way that its upper edge lies above the upper edge of the inner ring (10) and the outer ring (9), and the inner ring (10) is displaceable by means of a plurality of manually actuable displacement devices (12) disposed distributed over its circumference from the open position in such a way into the closed position that the upper edge of the sealing ring (11) lies sealingly against the underside of the closed hatch cover (1).

2. Entry/exit hatch according to claim 1, **characterized in that** the sealing ring (11) is vulcanized onto a fastening strip (10.1), which is disposed on the inside of the inner ring (10).

3. Entry/exit hatch according to claim 1 or 2, **characterized in that** the sealing ring (11) on its outside has an annular sealing tab (11.1) sealingly connected to the outer ring (9) and overlapping the join between inner ring (10) and outer ring (9).

4. Entry/exit hatch according to one of claims 1 to 3, **characterized in that** the displacement device (12) comprises a manually rotatable plate (12.1), which is disposed below the inner ring (10) and has on the upper side facing the inner ring a surface that ascends in a wedge-shaped manner in peripheral direction.

## Revendications

1. Écoutille d'entrée/sortie pour un véhicule de combat, en particulier pour un char d'assaut, comportant un couvercle d'écoutille (1) qui est agencé au-dessus du bord supérieur de l'ouverture d'écoutille (6) et qui, pour l'ouverture et la fermeture, est mobile parallèlement au plan de fermeture de l'écoutille, et comportant un dispositif d'étanchéité agencé dans l'ouverture d'écoutille (6) avec faculté de déplacement perpendiculairement au plan de fermeture et susceptible d'être abaissé dans une position d'ouverture aussi loin que le couvercle d'écoutille (1) soit mobile en translation sans entrave, tandis qu'il est susceptible d'être levé dans une position de fermeture aussi loin que son bord supérieur s'applique de manière étanche contre le côté inférieur du couvercle d'écoutille (1), **caractérisée en ce que** le dispositif d'étanchéité comprend un anneau extérieur (9) plat agencé fermement dans la zone de bord (6a) de l'ouverture d'écoutille (6) avec un anneau intérieur cylindrique (10) guidé contre le bord intérieur en translation perpendiculairement (S2) au plan de fermeture, et sur le côté intérieur de l'anneau intérieur (10) est agencé un anneau d'étanchéité (11) de telle sorte que son arête supérieure se trouve au-dessus de l'arête supérieure de l'anneau intérieur (10) et de l'anneau extérieur (9) et que l'anneau intérieur (10) est mobile en translation depuis la position d'ouverture jusque dans la position de fermeture au moyen de plusieurs dispositifs de translation (12) agencés en répartition sur sa périphérie et susceptibles d'être actionnés manuellement, de telle sorte que l'arête supérieure de l'anneau d'étanchéité (11) s'applique de manière étanche contre le côté inférieur du couvercle d'écoutille fermé (1).

2. Écoutille d'entrée/sortie selon la revendication 1, **caractérisée en ce que** l'anneau d'étanchéité (11) est susceptible d'être fixé par vulcanisation sur une baguette de fixation (10.1) agencée sur le côté intérieur de l'anneau intérieur (10).

3. Ecoutille d'entrée/sortie selon la revendication 1 ou 2, **caractérisée en ce que** l'anneau d'étanchéité (11) présente sur son côté extérieur une patte d'étanchéité annulaire (11.1) qui est reliée à l'anneau extérieur (9) de manière à recouvrir de façon étanche l'arête supérieure de l'anneau intérieur (10) et la jointure de séparation entre l'anneau intérieur (10) et l'anneau extérieur (9).

4. Ecoutille d'entrée/sortie selon l'une des revendications 1 à 3, **caractérisée en ce que** le dispositif de translation (12) comprend une plaque manuellement rotative (12.1) agencée au-dessous de l'anneau intérieur (10) qui possède une surface montant en forme de coin en direction périphérique sur le côté supérieur tourné vers l'anneau intérieur.
